(19) Europäisches Patentamt
European Patent Office
Office européen des brevets

(11) **EP 4 239 308 B1**

(12) **EUROPEAN PATENT SPECIFICATION**

(45) Date of publication and mention
of the grant of the patent:
**13.05.2026 Bulletin 2026/20**

(21) Application number: **21884868.7**

(22) Date of filing: **29.09.2021**

(51) International Patent Classification (IPC):
**G01M 13/025** (2019.01)

(52) Cooperative Patent Classification (CPC):
**G01M 13/025; G01M 13/021**

(86) International application number:
**PCT/CN2021/121589**

(87) International publication number:
**WO 2022/089139 (05.05.2022 Gazette 2022/18)**

(54) **SPEED REDUCER TRANSMISSION ERROR TEST APPARATUS AND METHOD**

VORRICHTUNG UND VERFAHREN ZUR ÜBERTRAGUNGSFEHLERPRÜFUNG BEI EINEM UNTERSETZUNGSGETRIEBE

APPAREIL ET PROCÉDÉ DE TEST D'ERREUR DE TRANSMISSION DE RÉDUCTEUR DE VITESSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2020 CN 202011172538**

(43) Date of publication of application:
**06.09.2023 Bulletin 2023/36**

(73) Proprietor: **KUKA Robotics Guangdong Co., Ltd.**
**Foshan, Guangdong 528000 (CN)**

(72) Inventors:
• **XU, Wencai**
**Foshan, Guangdong 528000 (CN)**
• **SHEN, Yi**
**Foshan, Guangdong 528000 (CN)**
• **ZHU, Xianyu**
**Foshan, Guangdong 528000 (CN)**
• **TU, Bicheng**
**Foshan, Guangdong 528000 (CN)**
• **LI, Jiantao**
**Foshan, Guangdong 528000 (CN)**

(74) Representative: **Dorow, Florian**
**Kuka SE & Co. KGaA**
**Zugspitzstraße 140**
**86165 Augsburg (DE)**

(56) References cited:
| | |
|---|---|
| CN-A- 102 519 723 | CN-A- 103 759 939 |
| CN-A- 104 807 631 | CN-A- 104 833 505 |
| CN-A- 106 644 463 | CN-A- 107 300 468 |
| CN-A- 109 883 696 | CN-A- 110 160 770 |
| CN-A- 111 189 634 | CN-A- 111 721 530 |
| CN-A- 111 780 967 | CN-A- 112 857 795 |
| CN-U- 203 688 220 | CN-U- 206 593 851 |
| US-A1- 2012 236 320 | US-A1- 2013 308 117 |

## Description

This application claims the priority of Chinese Patent Application No. 202011172538.2 filed on Wednesday, October 28, 2020 and entitled "A Speed Reducer Transmission Error Test Apparatus and Method".

## TECHNICAL FIELD

This application relates to the field of precision testing technology and mechanical transmission technology, and specifically to a speed reducer transmission error test apparatus and method.

## BACKGROUND

The transmission error of the reducer is the difference between the theoretical output and the actual output of the reducer during the movement. It is a direct manifestation of the pros and cons of the internal teeth of the reducer. It essentially reflects the level of the tooth profile design and the actual processing of the reducer. The detection of the transmission error of the reducer is the detection of the input and output angles during the movement of the reducer. At present, the synchronous acquisition of the rotation angles of the input and output ends of the reducer mainly adopts the method of installing a circular grating at the input and output of the reducer. The circular grating is a high-precision sensor component with high installation requirements, and requires high assembly accuracy. When installing the circular grating at the input and output ends of the reducer, it is necessary to use a high-stability cast iron or marble platform as the basis, and also design high-precision structural parts to install and protect the circular grating, which leads to a complex and difficult test process for the transmission error of the reducer, high requirements for operators, and low test efficiency. In addition, the quasi-static test method can also be used to collect the rotation angles of the input and output ends of the reducer. The quasi-static test method is to intermittently make the input end of the reducer rotate a specified angle and then stop to test the rotation angle of the output end of the reducer. While adopting the quasi-static test method, on the one hand, because the method is to discretize the transmission error, on the other hand, the backlash and small elastic deformation are inevitably introduced at the moment of each measurement pause, which leads to a certain difference between the actual test results and the transmission error. For a high-precision product such as a reducer for a robot, this error is obviously unacceptable. At the same time, when the quasi-static test method is used to test the output end angle of the reducer, other large-scale high-precision instruments and equipment, such as three-coordinates, are also required, resulting in complicated measurement process and low test efficiency, which cannot be widely used.

Therefore, the existing testing methods for the transmission error of the reducer are complicated in operation and difficult to be widely used in practical applications.

CN103759939A discloses an experiment table for testing transmission errors of a high-speed-ratio high-precision speed reducer. The experiment table is composed of an input shaft rotating device, a rack and a measuring system. The measuring system is composed of an output shaft, a measuring test block and a three-dimensional measuring instrument.

US2012236320A1 discloses a measurement with a system having retroreflector targets and a laser tracker includes storing a list of nominal coordinates for targets and one added point.

## Summary

The purpose of the present application is to solve the technical problem that the operation of the test method of the transmission error of the reducer in the prior art is complicated, and it is difficult to be widely used in practical applications.

In order to solve the above technical problems, the present application provides a test apparatus, including: a base; a test workpiece, wherein the test workpiece is provided on the output end of a speed reducer to be tested, and is driven by the output end to perform synchronous rotation, and the speed reducer is fixed on the base; a driving assembly, wherein the output end of the driving assembly is connected to the input end of the speed reducer, so that the driving assembly is used for driving the input end of the speed reducer to rotate and determining the rotation angle information of the input end of the speed reducer; A detection assembly, the detection assembly comprising a laser tracker located at one side of the output end of the speed reducer, and target balls provided on the test workpiece and with the function of reflecting the laser light emitted by the laser tracker, the target balls cooperate with the laser tracker so as to be used for determining the motion trajectory information of the target balls; and a receiving assembly, one end of the receiving assembly is electrically connected to the driving assembly, and the other end is electrically connected to the detecting assembly, and the receiving assembly is used for receiving the rotation angle information of the input end of the reducer and the target ball's rotation angle and determining the transmission error of the reducer according to the rotation angle information of the input end of the reducer and the motion track information of the target balls.

The drive assembly includes a motor, an encoder electrically connected to the motor, and a driver controlling the motor, the motor is located at the side of the base, and the extension shaft of the output end of the motor is connected to the input end of the reducer for driving the input end of the reducer to rotate, and determining the rotation angle information of the input end of the reducer through the encoder, one end of the driver is electrically connected to the motor, and the other end is electrically connected to the receiving assembly, the driver is used to receive the control command of the receiving assembly, and control the rotation of the motor, and send the rotation angle information of the input end of the reducer determined by the encoder to the receiving assembly.

In an embodiment, the test workpiece comprises a tool plate with a notch, an output end notch matched with the notch is arranged on the output end of the reducer, the test workpiece is matched with the output end notch through the notch, and rotates synchronously under the driving of the output end of the reducer.

In an embodiment, extension arms are symmetrically distributed on the tool plate, the target balls are symmetrically arranged at the ends of the extension arms, and the number of the target balls is multiple.

In an embodiment, a rotating level is provided on the extension arm of the test workpiece, and the rotating level is used to determine the starting point of the target balls.

In an embodiment, the base, the test workpiece, the reducer to be tested fixed on the base, and the motor connected to the reducer are one or more, and the number of the base, the test workpiece and the motor corresponds to the number of the reducer to be tested.

In an embodiment, the receiving assembly includes a data acquisition instrument and a display screen, the data acquisition instrument is electrically connected to the display screen, and the data acquisition instrument is configured to receive the rotation angle information of the input end of the reducer and the motion trajectory information of the target balls, determine the transmission error of the reducer based on the rotation angle information of the input end of the reducer and the motion trajectory information of the target ball, and display the transmission error of the reducer on the display screen.

In an embodiment, the testing apparatus further includes a controller, the control is configured for adjusting the working parameters of the motor and the laser tracker.

The present application also provides a method for testing the transmission error of the reducer, which is used to control the transmission error test device of the reducer as described above, wherein the method includes: acquiring the rotation angle information of the input end of the speed reducer and the motion trajectory information of the target balls. extracting the rotation angle of the input end of the reducer according to the rotation angle information of the input end of the reducer, and extracting the rotation angle of the output end of the reducer according to the motion trajectory information of the target balls; obtaining the transmission error of the reducer according to the formula $\theta_{er}=\theta_2-\theta_1/R$ and the rotation angle of the input end of the reducer and the rotation angle of the output end of the reducer, where $\theta_1$ is the rotation angle of the input end of the reducer, $\theta_2$ is the

rotation angle of the output end of the reducer, $\theta_{er}$ is the transmission error of the reducer, and R is the reduction ratio of the reducer.

In an embodiment, the step of extracting the rotation angle of the output end of the reducer according to the motion trajectory information of the target ball includes: determining the rotation angle of the output end of the reducer through the trigonometric formula $\theta=\arctan(y/x)$ according to the coordinate value of the target balls in the spatial rectangular coordinate system OXYZ, where x is the coordinate value of the target ball in the X-axis direction in the spatial rectangular coordinate system OXYZ, and y is the coordinate value of the target ball in the Y-axis direction in the spatial rectangular coordinate system OXYZ.

In the above technical solution, through the cooperative use of the target ball and the laser tracker, the motion trajectory information of the target ball in the process of rotating with the test workpiece is obtained, wherein the motion trajectory information can be measured by a series of coordinates in the spatial rectangular coordinate system. After that, the rotation angle of the output end of the reducer is obtained according to the motion trajectory information of the target ball. This application adopts the coordinate conversion method to eliminate the influence of the assembly process on the transmission error of the reducer. The test method adopted is simple and does not require too many technical requirements for the operator. When testing the transmission error of the reducers of different specifications and models, it only needs to simply match a test workpiece of known shape and size for installing the target ball. The test efficiency is high and can be widely used in practical applications.

It should be understood that the foregoing general description and the following detailed description are exemplary and explanatory only and cannot limit the present application. The matter for which protection is sought is defined by the appended claims.

BRIEF DESCRIPTION OF THE DRAWINGS

The drawings herein are incorporated into the specification and form a part of the specification, showing embodiments in accordance with the application, and are used together with the specification to explain the principles of the application. Obviously, the drawings in the following description are only some embodiments of the application. For those of ordinary skill in the art, other drawings can be obtained based on these drawings without creative work. In the attached picture:

Fig. 1 is a schematic diagram showing the structure of a reducer transmission error test device according to an exemplary embodiment.

Fig. 2 is a schematic diagram showing the connection between the reducer to be tested and the drive assembly fixed on the base in the reducer transmission error test according to an exemplary embodiment.

Fig. 3 is a schematic cross-sectional view of the reducer to be tested and the drive assembly fixed on the base in the reducer transmission error test device according to an exemplary embodiment.

Fig. 4 is a schematic diagram showing a workpiece to be tested according to an exemplary embodiment.

Fig. 5 is a schematic diagram of a spatial rectangular coordinate system in the reducer transmission error test device according to an exemplary embodiment.

Fig. 6 is a schematic flowchart of a reducer transmission error test method of the present application.

Fig. 7 is a schematic diagram showing the structure of a reducer transmission error test device with multiple samples to be tested according to an exemplary embodiment.

Fig. 8 is a block diagram showing a reducer transmission error test structure with multiple samples to be tested according to an exemplary embodiment.

Fig. 9 is a schematic flow chart showing a reducer transmission error test method with multiple samples to be tested according to an exemplary embodiment.

The reference signs are explained as follows: 1. Base; 2. Test workpiece; 21. Notch; 22. Workpiece plate; 221, extension arm; 2211, first extension arm; 2212, second extension arm; 2213, third extension arm; 2214, fourth extension arm; 23, rotating level; 3. drive assembly; 31, motor; 311, flange; 32, encoder; 33, drive; 4 detection assembly; 41, target balls; 411, the first target ball; 412, the second target ball; 413, the third target ball; 414, the fourth target ball; 42, the laser tracker; 5. the receiving assembly; 6. the reducer to be tested.

DETAILED DESCRIPTION

Typical embodiments embodying the features and advantages of the present application will be described in detail in the following description. It should be understood that the present application can have various changes in different implementations, which do not depart from the scope of the present application, and the descriptions and diagrams therein are essentially for illustrative purposes, rather than limiting this application.

In order to further illustrate the principle and structure of the application, the preferred embodiments of the application will be described in detail with reference to the accompanying drawings.

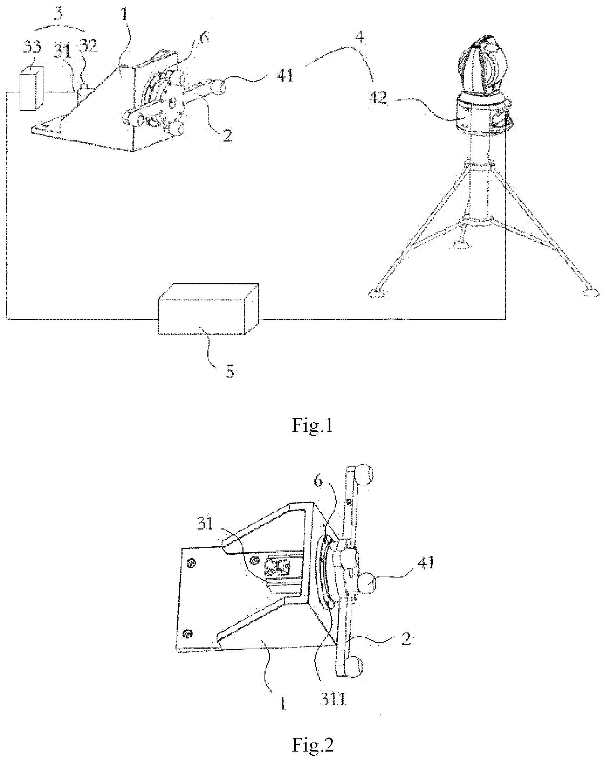

Fig. 1 is a schematic structural diagram of a reducer transmission error test device according to an exemplary embodiment. As shown in Fig. 1, the test device includes a base 1, a test workpiece 2, a drive assembly 3, a detection assembly 4, and a receiving assembly 5, a reducer 6 to be tested is fixed on the base 1, wherein the drive assembly 3 includes a motor 31, an encoder 32 electrically connected to the motor 31, and a driver 33 that controls the motor 31. It should be noted that the encoder 32 can be installed inside the motor 31 or outside the motor 32. The relative position of the encoder 32 and the motor 31 is not limited. The motor 31 is located on the side of the base 1. The extension shaft of the output end of the motor 31 and the input end of the reducer 6 is connected by the flange 311, the motor 31 is used to drive the input end of the reducer 6 to rotate, and the rotary angle information of the input end of the reducer 6 is determined by the electrically connected encoder 32, and one end of the driver 33 is electrically connected to the motor 31, the other end is electrically connected to the receiving assembly 5. The driver 33 is used to receive the control command from the receiving assembly, control the rotation of the motor 31, and send the rotation angle information of the input end of the reducer 6 determined by the encoder 32 to the receiving assembly 5. Please continue to refer to FIG. 1, where the detection assembly 4 includes target balls 41 arranged on the test workpiece 2, and a laser tracker 42 located on the output side of the reducer 6, and the target balls 41 are used for reflecting the laser tracker 42 emit by the laser tracker 42, the laser tracker 42 cooperates with the target balls 41 to obtain the motion trajectory information of the target balls 41 during the synchronous operation with the output end of the reducer 6. One end of the receiving assembly 5 is electrically connected to the driving assembly 3, and the other end is electrically connected to the detection assembly 4, and the receiving assembly 5 is used to receive the rotation angle information of the input end of the reducer 6 and the motion trajectory information of the target balls 41, and determine the transmission error of the reducer 6 according to the received rotation angle information of the input end of the reducer 6 and the motion trajectory information of the target balls 41.

In this embodiment, the reducer 6 can be driven by the motor 31 connected to the input end. Since the extension shaft of the output end of the motor 31 is fixedly connected to the input end of the reducer 6, the rotation angle of the input end of the reducer 6 and the rotation angle of the motor 31 is the same, the rotation angle of the input end of the reducer 6 is the same as the rotation angle fed back by the encoder 32. An encoder 32 that is electrically connected to the motor 31 can convert the rotation displacement of the motor 31 into a digital pulse signal. The driver 33 can receive a digital pulse signal and send it to the receiving assembly 5 as the input end rotation angle information of the reducer 6 for the next processing.

Further, a test workpiece 2 is provided on the output end of the reducer 6. Since the reducer 6 will continuously rotate under the drive of the motor 31, the test workpiece 2 on the output end of the reducer 6 will also rotate synchronously. Therefore, the target balls 41 on the test workpiece 2 will also rotate synchronously. The rotation angle of the target balls 41 is the rotation angle of the reducer 6. The laser tracker 42 on one side the output end of the reducer 6 and the target ball 41 on the test workpiece 2 can be used in conjunction to determine the motion trajectory information of the target balls 41 during operation with the test workpiece 2. According to the motion trajectory information, the rotation angle of the output end of the reducer 6 can be extracted.

Exemplarily, by establishing a spatial rectangular coordinate system OXYZ, the motion trajectory of the target balls 41 can be represented by multiple coordinates in the spatial rectangular coordinate system OXYZ, so as to facilitate subsequent extraction of the rotation angle of the output end of the reducer 6 from the motion trajectory information of the target ball 41.

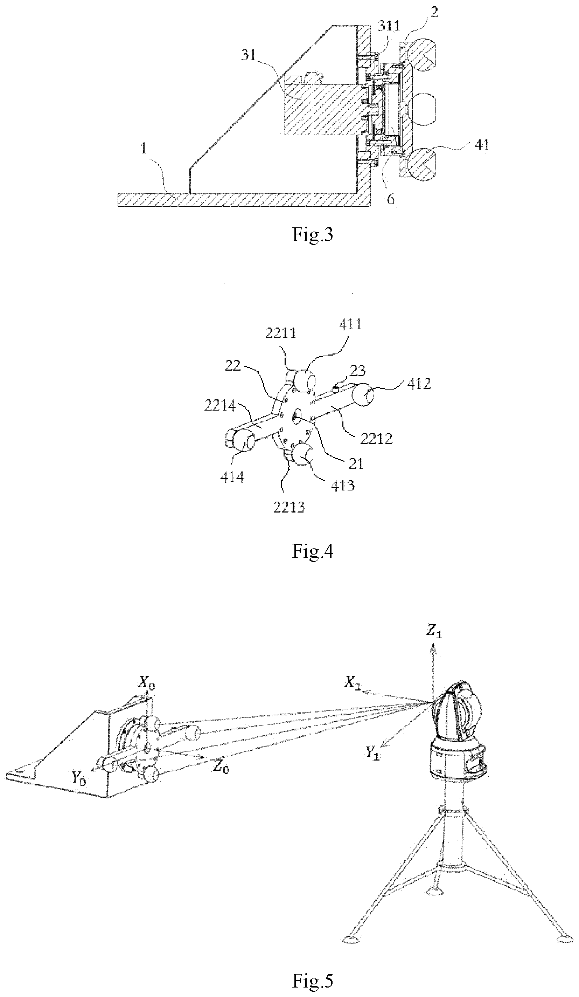

Exemplarily, as shown in FIG. 4, the test workpiece 2 includes a workpiece plate 22 with a notch 21. The notch 21 is a convex notch or a concave notch. Correspondingly, The output end stop on the output end of the reducer 6 matched with the notch 21 is also a convex notch or a concave notch. When the notch 21 is a convex notch, the output notch is a concave notch, and when the notch 21 is a concave notch, the output end notch is a convex notch, and the notch 21 and the output notch are fixed by screws, so that the test workpiece 2 is driven by the output end of the reducer 6 to rotate synchronously. The workpiece plate 22 includes symmetrically distributed extension arms 221, the number of the extension arm 221 is multiple, and the number of the target balls 41 provided at the end of the extension arm 221 is also multiple. The target balls 41 are symmetrically distributed at the end of the extension arm 221, and the number of the target balls 41 is less than or equal to the number of extension arms 221. For example, the number of extension arms 221 may be set to four, the number of target balls 41 may be set to two, or the number of extension arms 221 may be set to four, and the number of target balls 41 may be set to four. It should be noted that considering the stability of the test workpiece 2 during the rotation process, the extension arms 221 need to be symmetrically distributed on the workpiece plate 22, and the target ball 41 provided at the end of the extension arm 221 is also symmetrical distribution on the extension arm 221, so that the test workpiece 2 equipped with the target balls 41 has a higher stability during the rotation process.

In this embodiment, taking the number of target balls 41 and the number of extension arms 221 both as 4 as an example, the step of obtaining the rotation angle of the output end of the reducer 6 according to the motion trajectory information of the target balls 41 will be described in detail.

As shown in FIG. 4, when the number of target balls 41 and the number of extension arms 221 are both 4, the extension arm 221 includes a first extension arm 2211, a second extension arm 2212, a third extension arm 2213, and a fourth extension arm 2214 which are symmetrically distributed. The target ball 41 includes a first target ball 411 provided at the end of the first extension arm 2211, a second target ball 412 provided at the end of the second extension arm 2212, a third target ball 413 provided at the end of the third extension arm 2213, and a fourth target ball 414 provided at the end of the fourth extension arm 2214.

As shown in Fig. 5, first of all, in the space where the test workpiece 2 is located, a spatial rectangular coordinate system $O_0X_0Y_0Z_0$ is established. In order to facilitate subsequent data processing, the $X_0O_0Y_0$ plane of the spatial rectangular coordinate system $O_0X_0Y_0Z_0$ is set as the center of the target balls 41. That is, the $Z$-coordinates of the first target ball 411, the second target ball 412, the third target ball 413, and the fourth target ball 414 in the spatial rectangular coordinate system are all zero, and the starting coordinates of the first target ball 411, the second target ball 412, the third target ball 413, and the fourth target ball 414 are determined respectively.

Secondly, the laser tracker 42 is adjusted so that the laser light emitted by the target balls 41 can be reflected by the target ball 41, and in the space where the laser tracker 42 is located, a space rectangular coordinate system $O_1X_1Y_1Z_1$ is established, the coordinate origin $O_1$ of the space rectangular coordinate system $O_1X_1Y_1Z_1$ is the emission point of the laser. The coordinates of the target balls 41 in the spatial rectangular coordinate system $O_1X_1Y_1Z_1$ is determined according to the coordinate conversion formula:

$$\begin{bmatrix} X_1 \\ Y_1 \\ Z_1 \\ 1 \end{bmatrix} = M_1^0 \begin{bmatrix} X_0 \\ Y_0 \\ Z_0 \\ 1 \end{bmatrix}$$

Obtain the transformation matrix $M_1^0$, where

$$M_1^0 = \begin{bmatrix} a_{11} & a_{12} & a_{13} & t_x \\ a_{21} & a_{22} & a_{23} & t_y \\ a_{31} & a_{32} & a_{33} & t_z \\ 0 & 0 & 0 & 1 \end{bmatrix}$$

Among them, the step of obtaining the transformation matrix according to the coordinate transformation can be realized according to any target ball 41, for example, the transformation matrix can be obtained according to the coordinates of the first target ball 411 in the spatial rectangular coordinate system $O_0X_0Y_0Z_0$ and the coordinates in the spatial rectangular coordinate system $O_1X_1Y_1Z_1$. It should be noted that the acquired transformation matrix is stored in the receiving assembly 5 to facilitate subsequent data processing.

Further, one of the four target balls can be randomly selected, for example, the first target ball 411 is selected. During the rotation of the output end of the reducer 6, the laser tracker 42 will continuously emit laser light to the first target ball 411 and receive the laser light reflected by the first target ball 411. Through the cooperation of the target balls 41 and the laser tracker 42, the continuous coordinates of the first target ball 411 in the spatial rectangular coordinate system $O_1X_1Y_1Z_1$ can be obtained, that is, the motion track information of the first target ball 411. It should be noted that in this embodiment, in the test process, after the laser tracker 42 collects a preset set of coordinate data, a matrix transformation is completed, and thereafter, according to the continuous coordinates of the first target ball 411 in the spatial rectangular coordinate system $O_1X_1Y_1Z_1$ and the transformation matrix obtain the corresponding coordinates of the first target ball 411 in the spatial rectangular coordinate system $O_0X_0Y_0Z_0$.

The matrix transformation can also be performed after the laser tracker 42 completes the collection of all coordinate data. Then, according to the continuous coordinates of the first target ball 411 in the spatial rectangular coordinate system $O_1X_1Y_1Z_1$ and the transformation matrix obtain the corresponding coordinates of the first target ball 411 in the spatial rectangular coordinate system $O_0X_0Y_0Z_0$.

Based on the X value and Y value of the first target ball 411 in the spatial rectangular coordinate system $O_0X_0Y_0Z_0$, the rotation angle of the output end of the reducer 6 can be obtained through the trigonometric formula $\theta=\arctan(y/x)$.

In this embodiment, after the output end rotation angle of the reducer 6 is obtained, and the rotation angle of the input end of the reducer 6 is extracted from the rotation angle information of the reducer 6, the transmission error of the reducer is obtained according to the formula $\theta_{er}=\theta_2-\theta_1/R$ and the rotation angle of the input end of the reducer and the rotation angle of the output end of the reducer, where $\theta_1$ is the rotation angle of the input end of the reducer, $\theta_2$ is the rotation angle of the output end of the reducer, $\theta_{er}$ is the transmission error of the reducer, and R is the reduction ratio of the reducer.

Exemplarily, a rotating level 23 is also provided on the extension arm 221 of the test workpiece 2, and the rotating level 23 is used to determine the starting point of the target balls 41.

As shown in FIG. 5, by the rotating level 23, the X coordinate of the second target ball 412 and the fourth target ball 414 can be adjusted to zero, and the Y coordinate of the first target ball 411 and the third target ball 413 can be adjusted to zero, which is conducive to subsequent data processing.

Exemplarily, the receiving assembly 5 includes a data acquisition instrument and a display screen, the data acquisition instrument is electrically connected to the display screen, and the data acquisition instrument is used to receive the rotation angle information of the input end of the reducer 6 and the motion trajectory information of the target balls 41, determine the transmission error of the reducer 6 based on the rotation angle information of the input end of the reducer 6 and the motion trajectory information of the target balls 41, and display the transmission error of the reducer 6 on the display screen.

In this embodiment, the data acquisition instrument can collect and store the rotation angle information of the input end of the reducer 6 and the motion trajectory information of the target balls 41 in real time. After the transmission error of the reducer 6 is determined, the collected and stored data is cleared to facilitate subsequent data processing.

Exemplarily, the testing apparatus further includes a controller, the control is configured for adjusting the working parameters of the motor 31 and the laser tracker 42.

In this embodiment, the driver 33 can be set by the controller to realize the adjustment of the motor 31. For example, the rotation speed or the running speed/time of the motor 31 can be set on the driver 33 to make the motor 31 operate at the set rotation speed, or the data sampling frequency of the laser tracker 42 can be set.

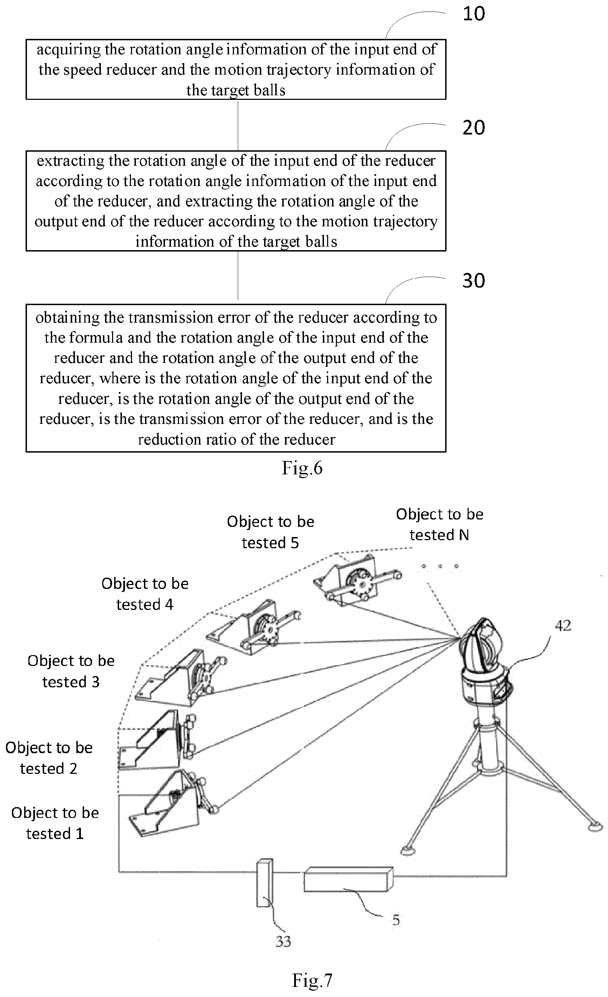

The present application also provides a reducer transmission error test method, as shown in FIG. 6, the method includes:

Step 10, acquiring the rotation angle information of the input end of the speed reducer and the motion trajectory information of the target balls.

Step 20, extracting the rotation angle of the input end of the reducer according to the rotation angle information of the input end of the reducer, and extracting the rotation angle of the output end of the reducer according to the motion trajectory information of the target balls.

Step 30, obtaining the transmission error of the reducer according to the formula $\theta_{er}=\theta_2-\theta_1/R$ and the rotation angle of the input end of the reducer and the rotation angle of the output end of the reducer, where $\theta_1$ is the rotation angle of the input end of the reducer, $\theta_2$ is the rotation angle of the output end of the reducer, $\theta_{er}$ is the transmission error of the reducer, and R is the reduction ratio of the reducer.

Further, the step of extracting the rotation angle of the output end of the reducer according to the motion trajectory information of the target balls includes:
determining the rotation angle of the output end of the reducer through the trigonometric formula $\theta=\arctan(y/x)$ according to the coordinate value of the target balls in the spatial rectangular coordinate system OXYZ, where x is the coordinate value of the target ball in the X-axis direction in the spatial rectangular coordinate system OXYZ, and y is the coordinate value of the target ball in the Y-axis direction in the spatial rectangular coordinate system OXYZ.

It should be noted that in most robots, the reducer is used in the form of "motor + flange + reducer", that is, the motor, flange and reducer are first combined into a component, and then the composed component is installed in each joint of the robot, and is especially widely used in SCARA (Selective Compliance Assembly Robot Arm) machines.

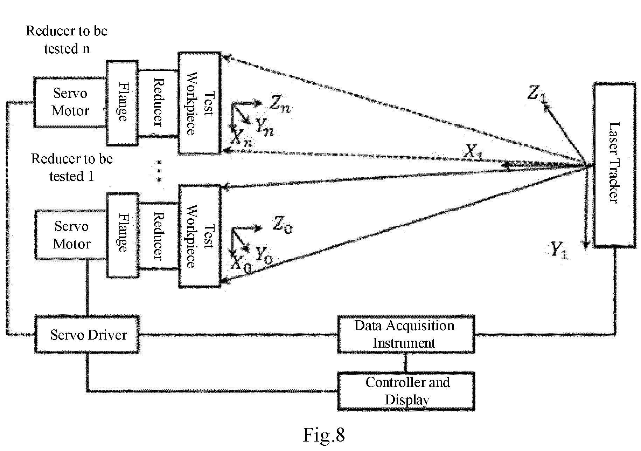

Based on the wide application of the existing reducer in robots, and the existing method of testing the transmission error of the reducer cannot meet the transmission error test requirements of the reducer in the robot, the test device provided by the application can detect the transmission error of multiple reducers. As shown in Fig. 7, the base 1, the test workpiece 2, the reducer 6 to be tested fixed on the base 1, and the motor 31 connected to the reducer 6 are one or more, and number of the base 1, the test workpiece 2 and motors 31 corresponds to the number of reducers 6 to be tested.

In this embodiment, Since the laser tracker 42 can realize 360 ° measurement in space, after the laser tracker 42 detects the transmission error of one of the reducer 6 to be tested, it can immediately detect the transmission error of the other reducer 6 to be tested. Among them, there may be multiple reducers 6 to be tested. The reducers 6 to be tested are respectively fixed on different bases 1, and the input end of the reducer 6 is connected to the corresponding motor 31. It should be noted that one driver can complete the control of multiple motors. Therefore, it is not necessary to connect the reducer 6 to be tested with the drive assembly 3 as a whole.

Please continue to refer to Fig. 8. Fig. 8 is a block diagram of a reducer transmission error test structure with a plurality of samples to be tested according to an exemplary embodiment. In this embodiment, the reducer to be tested is connected to a servo motor with an encoder.

In addition, when testing different types of reducers, the shape of the test workpiece used needs to be adjusted, so that the test workpiece used can meet the test requirements of the transmission error of the reducer.

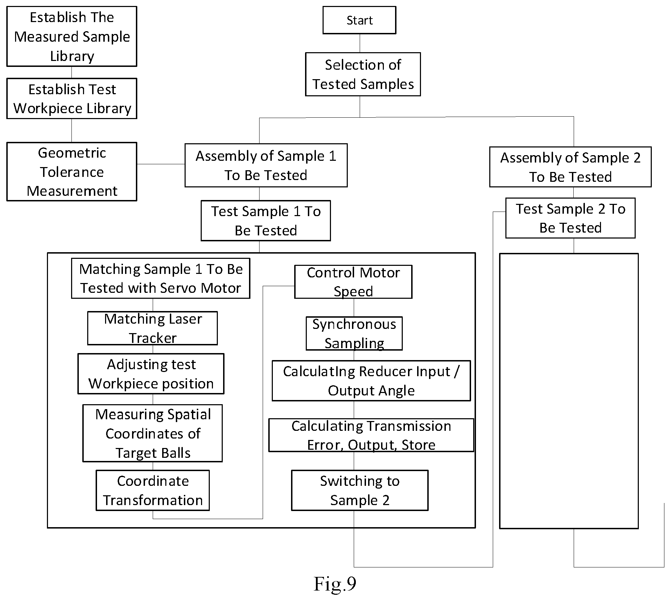

Fig. 9 is a flow chart showing the transmission error of multiple reducers according to an exemplary embodiment. As shown in the figure, when error detection is performed on multiple reducers, first, it is necessary to establish the sample library to be tested, i.e. the reducer library to be tested and the test workpiece library, and the geometric tolerances of different test workpiece in the test workpiece library are measured. The test workpiece library is established so that different types of reducers have matching test workpieces. Among them, the geometric tolerance is the included angle between the test workpiece and the spatial rectangular coordinate system, that is, the included angle formed by the test workpiece and the x-axis, Y-axis or z-axis respectively in the x-axis direction, Y-axis direction or z-axis direction.

After that, the sample to be tested is assembled, that is, the reducer and the motor are fixed on the base, and the input end of the reducer is connected with the motor through a flange. At the same time, the test workpiece is installed on the output end of the reducer, and the target ball is installed at the end of the extension arm of the test workpiece, and there are multiple samples to be tested.

Further, the relative position of the laser tracker and the sample to be tested is adjusted, and the collection instrument is electrically connected to the laser tracker and the motor respectively. It should be noted that a servo motor can be used instead of the motor, and an encoder is provided in the servo motor. It can be used to determine the rotation angle information of the input end of the reducer.

Further, the space rectangular coordinate system of the target ball and the space rectangular coordinate system of the space where the laser tracker is located are determined, and the transformation matrix is determined according to the coordinate transformation and the transformation matrix is stored in the data processor. And then the rotation speed of the motor is controlled to carry out synchronous sampling and the sampled data is processed to obtain the rotation angle of the input end of the reducer and the output end of the reducer, the transmission error of the reducer is calculated, and then switch to the output end side of another sample to be tested to carry out subsequent transmission error detection.

Compared with the prior art method of installing circular gratings at the input and output ends of the reducer, synchronously collecting the rotation angles of the input and output ends of the reducer, and adopting a quasi-static test method, intermittently make the input end of the reducer rotates a specified angle and then stops, and test the rotation angle of the output end of the reducer. The present application obtain the motion trajectory information of the target ball in the process of rotating with the test workpiece through the cooperative use of the target ball and the laser tracker, wherein the motion trajectory information can be measured by a series of coordinates in the spatial rectangular coordinate system. After that, the rotation angle of the output end of the reducer is obtained according to the motion trajectory information of the target ball. This application adopts the coordinate conversion method to eliminate the influence of the assembly process on the transmission error of the reducer. The test method adopted is simple and does not require too many technical requirements for the operator. When testing the transmission error of the reducers of different specifications and models, it only needs to simply match a test workpiece of known shape and size for installing the target ball. The test efficiency is high and can be widely used in practical applications. The above content is only a preferred exemplary embodiment of the present application, and is not used to limit the implementation of the present application. According to the main concept of the present application, those of ordinary skill in the art can easily make corresponding adaption or modifications. Therefore, the protection scope of this application shall be subject to the protection scope required by the claims.

**Claims**

1. A speed reducer (6) transmission error test apparatus, **characterized in that**, the test apparatus comprises:

a base (1);
a test workpiece (2), wherein the test workpiece (2) is provided on the output end of a speed reducer (6) to be tested, and is driven by the output end to perform synchronous rotation, and the speed reducer (6) is fixed on the base;
a driving assembly, wherein the output end of the driving assembly is connected to the input end of the speed reducer (6), so that the driving assembly is used for driving the input end of the speed reducer (6) to rotate and determining the rotation angle information of the input end of the speed reducer (6);
a detection assembly (4), the detection assembly (4) comprising a laser tracker (42) located at one side of the output end of the speed reducer (6), and target balls (41) provided on the test workpiece (2) and with the function of reflecting the laser light emitted by the laser tracker (42), the target balls (41) cooperate with the laser tracker (42) so as to be used for determining the motion trajectory information of the target balls (41);
and a receiving assembly (5), one end of the receiving assembly (5) is electrically connected to the driving assembly, and the other end is electrically connected to the detecting assembly, and the receiving assembly (5) is used for receiving the rotation angle information of the input end of the reducer (6) and the target ball's (41) rotation angle and determining the transmission error of the reducer (6) according to the rotation angle information of the input end of the reducer (6) and the motion track information of the target balls (41),
wherein the drive assembly (3) includes a motor (31), an encoder (32) electrically connected to the motor (31), and a driver controlling the motor (31), the motor (31) is located at the side of the base (1), and the extension shaft of the output end of the motor (31) is connected to the input end of the reducer (6) for driving the input end of the reducer (6) to rotate, and determining the rotation angle information of the input end of the reducer (6) through the encoder (32), one end of the driver is electrically connected to the motor (31), and the other end is electrically connected to the receiving assembly (5), the driver is used to receive the control command of the receiving assembly (5), and control the rotation of the motor (31), and send the rotation angle information of the input end of the reducer (6) determined by the encoder (32) to the receiving assembly (5).

2. The test apparatus according to claim 1, **characterized in that**, the test workpiece (2) comprises a tool plate with a notch (21), an output end notch matched with the notch (21) is arranged on the output end of the reducer (6), the test workpiece (2) is matched with the output end notch through the notch (21), and rotates synchronously under the driving of the output end of the reducer (6).

3. The test apparatus according to claim 2, **characterized in that**, extension arms (221) are symmetrically distributed on the tool plate, the target balls (41) are symmetrically arranged at the ends of the extension arms (221), and the number of the target balls (41) is multiple.

4. The test apparatus according to claim 1, **characterized in that**, the base (1), the test workpiece (2), the reducer (6) to be tested fixed on the base (1), and the motor (31) connected to the reducer (6) are one or more, and the number of the base (1), the test workpiece (2) and the motor (31) corresponds to the number of the reducer (6) to be tested.

5. The test apparatus according to claim 1, **characterized in that**, the receiving assembly (5) includes a data acquisition instrument and a display screen, the data acquisition instrument is electrically connected to the display screen, and the data acquisition instrument is configured to receive the rotation angle information of the input end of the reducer (6) and the motion trajectory information of the target balls (41), determine the transmission error of the reducer (6) based on the rotation angle information of the input end of the reducer (6) and the motion trajectory information of the target ball (41), and display the transmission error of the reducer (6) on the display screen.

6. The test apparatus according to claim 1, **characterized in that**, the testing apparatus further includes a controller, the control is configured for adjusting the working parameters of the motor (31) and the laser tracker (42).

7. A speed reducer (6) transmission error test method, configured for controlling the test device according to claim 1, wherein the method comprises:

acquiring the rotation angle information of the input end of the speed reducer (6) and the motion trajectory information of the target balls (41). extracting the rotation angle of the input end of the reducer (6) according to the rotation angle information of the input end of the reducer (6), and extracting the rotation angle of the output end of the reducer (6) according to the motion trajectory information of the target balls (41);

obtaining the transmission error of the reducer (6) according to the formula $\theta er=\theta 2-\theta 1/R$ and the rotation angle of the input end of the reducer (6) and the rotation angle of the output end of the reducer (6), where $\theta 1$ is the rotation angle of the input end of the reducer (6), $\theta 2$ is the rotation angle of the output end of the reducer (6), $\theta er$ is the transmission error of the reducer (6), and R is the reduction ratio of the reducer (6).

8. The test method according to claim 7, **characterized in that**, the step of extracting the rotation angle of the output end of the reducer (6) according to the motion trajectory information of the target balls (41) includes:

determining the rotation angle of the output end of the reducer (6) through the trigonometric formula $\theta=\arctan(y/x)$ according to the coordinate value of the target balls (41) in the spatial rectangular coordinate system OXYZ, where x is the coordinate value of the target ball (41) in the X-axis direction in the spatial rectangular coordinate system OXYZ, and y is the coordinate value of the target ball (41) in the Y-axis direction in the spatial rectangular coordinate system OXYZ.

**Patentansprüche**

1. Vorrichtung zur Übertragungsfehlerprüfung bei einem Untersetzungsgetriebe (6), **dadurch gekennzeichnet, dass** die Prüfvorrichtung umfasst:

eine Basis (1);
ein Prüfwerkstück (2), wobei das Prüfwerkstück (2) am Abtriebsende eines zu prüfenden Untersetzungsgetriebes (6) bereitgestellt ist und vom Abtriebsende angetrieben wird, um eine synchrone Drehung durchzuführen, und das Untersetzungsgetriebe (6) an der Basis befestigt ist;
eine Antriebsbaugruppe, wobei das Abtriebsende der Antriebsbaugruppe mit dem Antriebsende des Untersetzungsgetriebes (6) verbunden ist, so dass die Antriebsbaugruppe dazu dient, das Antriebsende des Untersetzungsgetriebes (6) zur Drehung anzutreiben und die Drehwinkelinformationen des Antriebsendes des Untersetzungsgetriebes (6) zu bestimmen;
eine Erkennungsbaugruppe (4), wobei die Erkennungsbaugruppe (4) einen Lasertracker (42), der sich an einer Seite des Abtriebsendes des Untersetzungsgetriebes (6) befindet, und Zielkugeln (41) umfasst, die an dem Prüfwerkstück (2) bereitgestellt sind und die Funktion haben, das vom Lasertracker (42) emittierte Laserlicht zu reflektieren, wobei die Zielkugeln (41) mit dem Lasertracker (42) zusammenwirken, um zur Bestimmung der Bewegungsbahninformationen der Zielkugeln (41) verwendet zu werden;
und eine Empfangsbaugruppe (5), wobei ein Ende der Empfangsbaugruppe (5) elektrisch mit der Antriebsbaugruppe verbunden ist und das andere Ende elektrisch mit der Erkennungsbaugruppe verbunden ist, und die Empfangsbaugruppe (5) dazu dient, die Drehwinkelinformationen des Antriebsendes des Untersetzungsgetriebes (6) und den Drehwinkel der Zielkugeln (41) zu empfangen und den Übertragungsfehler des Untersetzungsgetriebes (6) gemäß den Drehwinkelinformationen des Antriebsendes des Untersetzungsgetriebes (6) und den Bewegungsbahninformationen der Zielkugeln (41) zu bestimmen,
wobei die Antriebsbaugruppe (3) einen Motor (31), einen elektrisch mit dem Motor (31) verbundenen Codierer (32) und einen den Motor (31) steuernden Treiber umfasst, wobei sich der Motor (31) an der Seite der Basis (1) befindet und die Verlängerungswelle des Abtriebsendes des Motors (31) mit dem Antriebsende des Untersetzungsgetriebes (6) verbunden ist, um das Antriebsende des Untersetzungsgetriebes (6) zur Drehung anzutreiben und die Drehwinkelinformationen des Antriebsendes des Untersetzungsgetriebes (6) über den Codierer (32) zu bestimmen, ein Ende des Treibers elektrisch mit dem Motor (31) verbunden ist und das andere Ende elektrisch mit der Empfangsbaugruppe (5) verbunden ist, der Treiber dazu dient, den Steuerbefehl der Empfangsbaugruppe (5) zu empfangen, die Drehung des Motors (31) zu steuern und die vom Codierer (32) bestimmten Drehwinkelinformationen des Antriebsendes des Untersetzungsgetriebes (6) an die Empfangsbaugruppe (5) zu senden.

2. Prüfvorrichtung nach Anspruch 1, **dadurch gekennzeichnet, dass** das Prüfwerkstück (2) eine Werkzeugplatte mit einer Aussparung (21) umfasst, am Abtriebsende des Untersetzungsgetriebes (6) eine mit der Aussparung (21) abgestimmte abtriebsendseitige Aussparung angeordnet ist, das Prüfwerkstück (2) über die Aussparung (21) mit der abtriebsendseitigen Aussparung abgestimmt ist und sich unter dem Antrieb des Abtriebsendes des Untersetzungsgetriebes (6) synchron dreht.

3. Prüfvorrichtung nach Anspruch 2, **dadurch gekennzeichnet, dass** Auslegerarme (221) symmetrisch an der Werkzeugplatte verteilt sind, die Zielkugeln (41) symmetrisch an den Enden der Auslegerarme (221) angeordnet sind und die Anzahl der Zielkugeln (41) mehr als eine beträgt.

4. Prüfvorrichtung nach Anspruch 1, **dadurch gekennzeichnet, dass** es sich bei der Basis (1), dem Prüfwerkstück (2), dem an der Basis (1) befestigten und zu prüfenden Untersetzungsgetriebe (6) sowie dem mit dem Untersetzungsgetriebe (6) verbundenen Motor (31) jeweils um ein oder mehrere Exemplare handelt und die Anzahl der Basis (1), des Prüfwerkstücks (2) und des Motors (31) der Anzahl der zu prüfenden Untersetzungsgetriebe (6) entspricht.

5. Prüfvorrichtung nach Anspruch 1, **dadurch gekennzeichnet, dass** die Empfangsbaugruppe (5) ein Datenerfassungsgerät und einen Anzeigebildschirm umfasst, das Datenerfassungsgerät elektrisch mit dem Anzeigebildschirm verbunden ist und das Datenerfassungsgerät so konfiguriert ist, dass es die Drehwinkelinformationen des Antriebsendes des Untersetzungsgetriebes (6) sowie die Bewegungsbahninformationen der Zielkugeln (41) erfasst, den Übertragungsfehler des Untersetzungsgetriebes (6) auf Grundlage der Drehwinkelinformationen des Antriebsendes des Untersetzungsgetriebes (6) und der Bewegungsbahninformationen der Zielkugel (41) bestimmt und den Übertragungsfehler des Untersetzungsgetriebes (6) auf dem Anzeigebildschirm anzeigt.

6. Prüfvorrichtung nach Anspruch 1, **dadurch gekennzeichnet, dass** die Prüfvorrichtung ferner eine Steuerung umfasst, wobei die Steuerung zum Anpassen der Arbeitsparameter des Motors (31) und des Lasertrackers (42) konfiguriert ist.

7. Verfahren zur Übertragungsfehlerprüfung bei einem Untersetzungsgetriebe (6), das zum Steuern der Prüfvorrichtung nach Anspruch 1 konfiguriert ist, wobei das Verfahren umfasst:

Erfassen der Drehwinkelinformationen des Antriebsendes des Untersetzungsgetriebes (6) und der Bewegungsbahninformationen der Zielkugeln (41).
Extrahieren des Drehwinkels des Antriebsendes des Untersetzungsgetriebes (6) gemäß den Drehwinkelinformationen des Antriebsendes des Untersetzungsgetriebes (6) und Extrahieren des Drehwinkels des Abtriebsendes des Untersetzungsgetriebes (6) gemäß den Bewegungsbahninformationen der Zielkugeln (41);
Ermitteln des Übertragungsfehlers des Untersetzungsgetriebes (6) gemäß der Formel $\theta er=\theta 2-\theta 1/R$ und dem Drehwinkel des Antriebsendes des Untersetzungsgetriebes (6) sowie dem Drehwinkel des Abtriebsendes des Untersetzungsgetriebes (6), wobei $\theta 1$ der Drehwinkel des Antriebsendes des Untersetzungsgetriebes (6) ist, $\theta 2$ der Drehwinkel des Abtriebsendes des Untersetzungsgetriebes (6) ist, $\theta er$ der Übertragungsfehler des Untersetzungsgetriebes (6) ist und R das Untersetzungsverhältnis des Untersetzungsgetriebes (6) ist.

8. Prüfverfahren nach Anspruch 7, **dadurch gekennzeichnet, dass** der Schritt des Extrahierens des Drehwinkels des Abtriebsendes des Untersetzungsgetriebes (6) gemäß den Bewegungsbahninformationen der Zielkugeln (41) umfasst:
Bestimmen des Drehwinkels des Abtriebsendes des Untersetzungsgetriebes (6) mittels der trigonometrischen Formel $\theta =\arctan(y/x)$ gemäß dem Koordinatenwert der Zielkugeln (41) im räumlichen rechtwinkligen Koordinatensystem OXYZ, wobei x der Koordinatenwert der Zielkugel (41) in der X-Achsenrichtung im räumlichen rechtwinkligen Koordinatensystem OXYZ ist und y der Koordinatenwert der Zielkugel (41) in der Y-Achsenrichtung im räumlichen rechtwinkligen Koordinatensystem OXYZ ist.

## Revendications

1. Appareil d'essai d'erreur de transmission pour un réducteur de vitesse (6), **caractérisé en ce que** l'appareil d'essai comporte :

une base (1) ;
une pièce d'essai (2), la pièce d'essai (2) étant disposée sur l'extrémité de sortie d'un réducteur de vitesse (6) à l'essai, et étant entraînée par l'extrémité de sortie pour effectuer une rotation synchrone, et le réducteur de vitesse (6) étant fixé sur la base ;
un ensemble d'entraînement, l'extrémité de sortie de l'ensemble d'entraînement étant raccordée à l'extrémité d'entrée du réducteur de vitesse (6), de sorte que l'ensemble d'entraînement est utilisé pour entraîner l'extrémité d'entrée du réducteur de vitesse (6) en rotation et déterminer les informations d'angle de rotation de l'extrémité d'entrée du réducteur de vitesse (6) ;
un ensemble de détection (4), l'ensemble de détection (4) comprenant un appareil de poursuite laser (42) situé d'un côté de l'extrémité de sortie du réducteur de vitesse (6), et des billes cibles (41) placées sur la pièce d'essai (2) et ayant pour fonction de réfléchir la lumière laser émise par l'appareil de poursuite laser (42), les billes cibles (41) coopérant avec l'appareil de poursuite laser (42) de sorte qu'elles sont utilisées pour déterminer les informations de trajectoire de mouvement des billes cibles (41) ;

et un ensemble de réception (5), une extrémité de l'ensemble de réception (5) étant reliée électriquement à l'ensemble d'entraînement, et l'autre extrémité étant reliée électriquement à l'ensemble de détection, et l'ensemble de réception (5) étant utilisé pour recevoir les informations d'angle de rotation de l'extrémité d'entrée du réducteur (6) et l'angle de rotation des billes cibles (41) et déterminer l'erreur de transmission du réducteur (6) en fonction des informations d'angle de rotation de l'extrémité d'entrée du réducteur (6) et des informations de trajectoire de mouvement des billes cibles (41),

l'ensemble d'entraînement (3) comprenant un moteur (31), un encodeur (32) relié électriquement au moteur (31), et un mécanisme d'entraînement commandant le moteur (31), le moteur (31) étant situé sur le côté de la base (1), et l'arbre d'extension de l'extrémité de sortie du moteur (31) étant relié à l'extrémité d'entrée du réducteur (6) pour entraîner en rotation l'extrémité d'entrée du réducteur (6), et déterminer les informations d'angle de rotation de l'extrémité d'entrée du réducteur (6) par le biais de l'encodeur (32), une extrémité du mécanisme d'entraînement étant reliée électriquement au moteur (31), et l'autre extrémité étant reliée électriquement à l'ensemble de réception (5), le mécanisme d'entraînement étant utilisé pour recevoir des instructions de commande de l'ensemble de réception (5), et commander la rotation du moteur (31), et envoyer les informations d'angle de rotation de l'extrémité d'entrée du réducteur (6) déterminées par l'encodeur (32) à l'ensemble de réception (5).

2. Appareil d'essai selon la revendication 1, **caractérisé en ce que** la pièce d'essai (2) comprend une plaque porte-outil avec une encoche (21), une encoche d'extrémité de sortie correspondant à l'encoche (21) est formée sur l'extrémité de sortie du réducteur (6), la pièce d'essai (2) est mise en correspondance avec l'encoche d'extrémité de sortie par le biais de l'encoche (21) et tourne de manière synchrone sous l'entraînement de l'extrémité de sortie du réducteur (6).

3. Appareil d'essai selon la revendication 2, **caractérisé en ce que** des bras saillants (221) sont répartis symétriquement sur la plaque porte-outil, les billes cibles (41) sont disposées symétriquement aux extrémités des bras saillants (221) et il y a une pluralité de billes cibles (41).

4. Appareil d'essai selon la revendication 1, **caractérisé en ce que** la base (1), la pièce d'essai (2), le réducteur (6) à l'essai fixé sur la base (1) et le moteur (31) relié au réducteur (6) sont au nombre d'un ou plus, et le nombre de bases (1), de pièces d'essai (2) et de moteurs (31) correspond au nombre de réducteurs (6) à l'essai.

5. Appareil d'essai selon la revendication 1, **caractérisé en ce que** l'ensemble de réception (5) comporte un instrument d'acquisition de données et un écran d'affichage, l'instrument d'acquisition de données étant relié électriquement à l'écran d'affichage, et l'instrument d'acquisition de données étant conçu pour recevoir les informations d'angle de rotation de l'extrémité d'entrée du réducteur (6) et les informations de trajectoire de mouvement des billes cibles (41), déterminer l'erreur de transmission du réducteur (6) sur la base des informations d'angle de rotation de l'extrémité d'entrée du réducteur (6) et des informations de trajectoire de mouvement des billes cibles (41), et afficher l'erreur de transmission du réducteur (6) sur l'écran d'affichage.

6. Appareil d'essai selon la revendication 1, **caractérisé en ce que** l'appareil d'essai comprend en outre un dispositif de commande, le dispositif de commande étant conçu pour ajuster les paramètres de fonctionnement du moteur (31) et de l'appareil de poursuite laser (42).

7. Procédé d'essai d'erreur de transmission pour un réducteur de vitesse (6), conçu pour commander l'appareil d'essai selon la revendication 1, le procédé comprenant :

acquérir des informations d'angle de rotation de l'extrémité d'entrée du réducteur de vitesse (6) et des informations de trajectoire de mouvement des billes cibles (41) ;

obtenir l'angle de rotation de l'extrémité d'entrée du réducteur (6) à partir des informations d'angle de rotation de l'extrémité d'entrée du réducteur (6), et obtenir l'angle de rotation de l'extrémité de sortie du réducteur (6) à partir des informations de trajectoire de mouvement des billes cibles (41) ;

déterminer l'erreur de transmission du réducteur (6) selon la formule $\theta er=\theta 2-\theta 1/R$ et l'angle de rotation de l'extrémité d'entrée du réducteur (6) et l'angle de rotation de l'extrémité de sortie du réducteur (6), où $\theta 1$ est l'angle de rotation de l'extrémité d'entrée du réducteur (6), $\theta 2$ est l'angle de rotation de l'extrémité de sortie du réducteur (6), $\theta er$ est l'erreur de transmission du réducteur (6), et R est le rapport de réduction du réducteur (6).

8. Procédé d'essai selon la revendication 7, **caractérisé en ce que** l'obtention de l'angle de rotation de l'extrémité de sortie du réducteur (6) à partir des informations de trajectoire de mouvement des billes cibles (41) comprend :

déterminer l'angle de rotation de l'extrémité de sortie du réducteur (6) par la formule trigonométrique θ=arctan(y/x) en fonction de la valeur de coordonnées des billes cibles (41) dans le système de coordonnées spatiales rectangulaires OXYZ, où x est la valeur de coordonnées de la bille cible (41) dans la direction de l'axe X dans le système de coordonnées spatiales rectangulaires OXYZ, et y est la valeur de coordonnées de la bille cible (41) dans la direction de l'axe Y dans le système de coordonnées spatiales rectangulaires OXYZ.

Fig.1

Fig.2

Fig.3

Fig.4

Fig.5

10

acquiring the rotation angle information of the input end of the speed reducer and the motion trajectory information of the target balls

20

extracting the rotation angle of the input end of the reducer according to the rotation angle information of the input end of the reducer, and extracting the rotation angle of the output end of the reducer according to the motion trajectory information of the target balls

30

obtaining the transmission error of the reducer according to the formula and the rotation angle of the input end of the reducer and the rotation angle of the output end of the reducer, where is the rotation angle of the input end of the reducer, is the rotation angle of the output end of the reducer, is the transmission error of the reducer, and is the reduction ratio of the reducer

Fig.6

Object to be tested 5

Object to be tested N

Object to be tested 4

Object to be tested 3

Object to be tested 2

Object to be tested 1

42

5

33

Fig.7

Fig.8

Establish The
Measured Sample
Library

Establish Test
Workpiece Library

Geometric
Tolerance
Measurement

Start

Selection of
Tested Samples

Assembly of Sample 1
To Be Tested

Assembly of Sample 2
To Be Tested

Test Sample 1 To
Be Tested

Test Sample 2 To
Be Tested

Matching Sample 1 To Be
Tested with Servo Motor

Control Motor
Speed

Matching Laser
Tracker

Synchronous
Sampling

Adjusting test
Workpiece position

Calculating Reducer Input /
Output Angle

Measuring Spatial
Coordinates of
Target Balls

Calculating Transmission
Error, Output, Store

Coordinate
Transformation

Switching to
Sample 2

Fig.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011172538
- CN 103759939 A

- US 2012236320 A1